# DEMANDE DE BREVET EUROPEEN

(11) **EP 0 816 518 A1**
(43) Date de publication de la demande: **07.01.1998**
(21) Numéro de dépôt: 97401505.9
(22) Date de dépôt: 27.06.1997
(51) Int. Cl.: C21D 1/10

(54) **Procédé et dispositif de durcissement de surface d'une pièce mécanique**

(30) Priorité: 27.06.1996 FR 9608017
(71) Demandeur: RENAULT, 92109 Boulogne-Billancourt (FR); SAET, 10040 Leini (IT)
(72) Inventeur: Criqui, Bernard, 92150 Suresnes (FR); Bonzano, Giorgio, 10040 Leini (IT)
(74) Mandataire: Fernandez, Francis

(57) **Abrégé**

Selon l'invention, ledit procédé consiste à appliquer localement en motifs à la surface d'une pièce (10) des impulsions de courte durée d'une induction magnétique de valeur crête élevée, obtenue par un noyau magnétique inducteur (20), la durée desdites impulsions et ladite valeur crête étant aptes à provoquer un chauffage superficiel de la pièce (10), sensiblement limitée à l'épaisseur de peau dudit matériau, jusqu'à une température d'austénitisation partielle du matériau.

Application à l'industrie automobile, notamment pour durcir les cylindres moteurs et les paliers tournants.

## Description

La présente invention concerne un procédé et un dispositif de durcissement de surface d'une pièce mécanique.

L'invention trouve une application particulièrement avantageuse dans le domaine de l'industrie automobile, notamment pour durcir en surface des pièces mécaniques soumises à frottement.

Dans l'industrie automobile, il est souvent nécessaire de renforcer la résistance à l'usure des pièces mécaniques frottantes, glissant sous faible pression de contact, telles que les cylindres de moteur en fonte et les paliers tournants. Le procédé généralement utilisé à cette fin consiste en un durcissement de surface obtenu par chauffage superficiel du matériau des pièces à traiter, le plus souvent un matériau ferreux du type fonte ou acier, sous l'action d'une source à haute densité d'énergie, supérieur à 1 kW/cm², pendant un temps d'interaction court, inférieur à 1 s.

Ce procédé général est actuellement mis en oeuvre selon deux techniques particulières différentes.

La première de ces techniques connues est le chauffage par induction au moyen d'un inducteur annulaire translaté, par exemple, dans le cylindre à durcir en surface. Avec une puissance de plus de 50 kW, on obtient typiquement des profondeurs de durcissement supérieures à 0,5 mm. Ce procédé par induction est utilisé dans l'industrie automobile essentiellement pour durcir les gros cylindres des moteurs de véhicules industriels. La demande de brevet allemand n° 44 42 821 décrit l'utilisation d'un dispositif d'inducteur annulaire à encoches pour durcissement par taches de cylindres moteurs.

La deuxième technique est celle du chauffage par rayonnement laser dans lequel le durcissement est localisé plus superficiellement en surface sur une profondeur de 0,3 à 0,6 mm. En pratique, le chauffage laser est appliqué pour avoir des petites séries de moteurs fortement sollicités. On connaît également un procédé de durcissement par laser CO₂ selon des taches ovales de cylindres de moteurs Diesel.

Cependant, ces deux techniques connues, qu'elles soient par induction magnétique ou par rayonnement laser, présentent un certain nombre d'inconvénients qui en limitent l'application.

En effet, si la technique de chauffage au laser CO₂ induit une profondeur de durcissement limitée à 0,3 mm, elle n'en reste pas moins coûteuse au niveau des dispositifs d'industrialisation. La technique laser YAG permet même de réduire à 0,1 mm cette profondeur de durcissement, mais elle est également coûteuse au niveau des sources, limitées en puissance à 2 kW, et nécessite encore une mise au point au niveau du procédé.

La technique par induction permet, quant à elle, d'utiliser des puissances importantes dépassant 50 kW et des dispositifs simples. Néanmoins, le durcissement procède par transformation martensitique du matériau constituant les pièces à traiter, sur une profondeur qui, compte tenu de la diffusion thermique dans ledit matériau, dépasse d'un facteur 3 celle des courants induits, soit typiquement plus de 0,6 mm. Cette transformation structurale du matériau s'accompagne d'une dilatation volumique de 1/100 qui, intégrée sur la profondeur de 0,6 mm, produit un resserrement des cylindres, par exemple, de l'ordre de 6/100 mm. Il en résulte des difficultés pour reprendre les pièces par pierrage pour les tenir dans la tolérance de cylindricité de 10 µm, dues aux risques de déformation par instabilité thermique de la pièce chauffée.

Aussi, le but de la présente invention est de proposer un procédé et un dispositif de durcissement qui permettrait de renforcer la résistance à l'usure de pièces mécaniques, telles que les pièces flottantes, glissantes sous faible pression de contact, en réalisant un durcissement sur une faible profondeur, de 0,1 à 0,2 mm, par transformation structurale appropriée de la matière en minimisant les déformations et en mettant en oeuvre un dispositif simple, fiable et économique en vue d'une fabrication en grande série.

Ce but est atteint, selon la présente invention, par un procédé de durcissement de surface d'une pièce mécanique en un matériau donné, remarquable en ce que ledit procédé consiste à appliquer localement en motifs à la surface de ladite pièce des impulsions de courte durée d'une induction magnétique de valeur crête élevée, la durée desdites impulsions et ladite valeur crête étant aptes à provoquer un chauffage superficiel de la pièce, sensiblement limitée à l'épaisseur de peau dudit matériau, jusqu'à une température d'austénitisation partielle du matériau.

Ainsi, compte tenu du temps d'interaction énergie-matière très court, le procédé de l'invention permet de s'affranchir des phénomènes de transfert thermique liés à la conductibilité thermique du matériau. Il en résulte un chauffage limité à l'effet de peau des courants induits, soit une profondeur très faible, inférieure à 0,2 mm à des hautes fréquences supérieures à 150 kHz.

Après refroidissement très rapide par auto-trempe du matériau, la structure polite-austénite, obtenue par austénitisation partielle à la suite du chauffage par induction au-delà de la température de début de transformation austénitique, se transforme en une structure martensitique incomplète dans laquelle une proportion de la structure d'origine et le durcissement localisé en surface en motifs non jointifs permettent d'absorber la dilatation volumique martensitique par la ferrite de la matrice perlitique sur une faible profondeur et de réduire les déformations thermiques à moins de 10 µm, ce qui se traduit par la possibilité de supprimer la rectification-finition des paliers, de limiter le pierrage des cylindres à la finition et surtout d'assurer la pierrabilité fine envisagée pour réduire la consommation d'huile. Enfin, la structure métallurgique biphasée perlite-martensite est propice à la fonction frottement-glissement des pièces mécaniques du type cylindres moteurs et paliers tournants.

Enfin, et comme on le verra en détail plus loin, un dispositif de durcissement de surface d'une pièce mécanique en un matériau donné est remarquable, selon l'invention, en ce que ledit dispositif comporte:
- un noyau magnétique inducteur destiné à être appliqué localement en motifs à la surface de ladite pièce;
- un circuit électrique formant enroulement au moins partiel autour dudit noyau;
- une alimentation de courant apte à délivrer audit circuit électrique des impulsions de courte durée d'un courant électrique de puissance crête élevée, la durée desdites impulsions et ladite puissance crête étant aptes à provoquer, par induction magnétique, un chauffage superficiel de la pièce, sensiblement limité à l'épaisseur de peau dudit matériau, jusqu'à une température d'austénitisation partielle du matériau.

La description qui va suivre en regard des dessins annexés, donnés à titre d'exemples non limitatifs, fera bien comprendre en quoi consiste l'invention et comment elle peut être réalisée:
- la figure 1 est une vue en perspective d'un noyau magnétique inducteur appliqué sur la surface d'une pièce soumise au procédé de durcissement objet de l'invention;
- la figure 2 est une vue en perspective d'une variante de réalisation du noyau magnétique inducteur de la figure 1;
- la figure 3 est un schéma donnant l'évolution au cours du temps de la puissance délivrée par l'alimentation en courant d'un dispositif de durcissement de surface conforme à l'invention;
- la figure 4 est un schéma donnant l'évolution au cours du temps de la température de surface d'une pièce soumise au schéma de puissance de la figure 3;
- la figure 5 est un diagramme donnant la répartition de la densité de puissance et de la température induites à la surface d'une pièce sur laquelle est appliqué un noyau magnétique inducteur conforme aux figures 1 et 2.

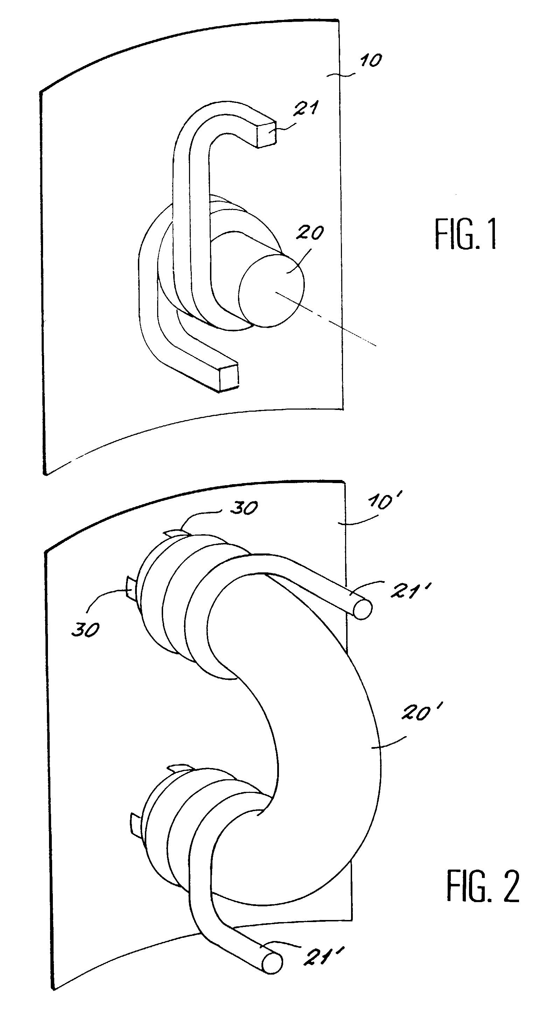

Les figures 1 et 2 montrent la surface 10, 10' d'une pièce mécanique frottante comme un cylindre moteur ou un palier tournant, dont le matériau constitutif est, par exemple, un matériau ferreux du type fonte ou acier à matrice perlitique.

La surface 10, 10' de ladite pièce mécanique est destinée à être durcie sur une faible profondeur, 0,2 mm ou moins, au moyen d'un dispositif de durcissement par chauffage par induction comportant un noyau magnétique inducteur 20, 20' qui peut être de simple forme cylindrique ou autre comme sur la figure 1 ou en forme de U, en fer à cheval, comme sur la figure 2. Le noyau 20, 20' est réalisé, par exemple, en matériau ferrotron ou composite fritté à base de poudre de ferro-silicium allié au bore, enrobée dans une matrice isolante époxy ou céramiquement présentant les propriétés électromagnétiques suivantes:
- résistance électrique supérieure à 10⁷Ω;
- perméabilité magnétique relative supérieure à 2000;
- champ magnétique à saturation supérieur à 1,5 T.

Comme l'indiquent les figures 1 et 2, autour du noyau 20, 20' est enroulé au moins partiellement un circuit électrique 21, 21' réalisé en tube de cuivre de section ronde ou carrée, de diamètre intérieur/extérieur respectivement de 3/5 mm de manière:
- à être enroulé autour du noyau magnétique de diamètre fixe ou évolutif;
- à constituer un enroulement avec empilement multi-spires jointives compact;
- à être refroidi par une circulation intérieure d'eau inférieure à 5 bar;
- à être parcouru par un courant d'intensité supérieure à 1000 A sous 50 à 100 V de tension.

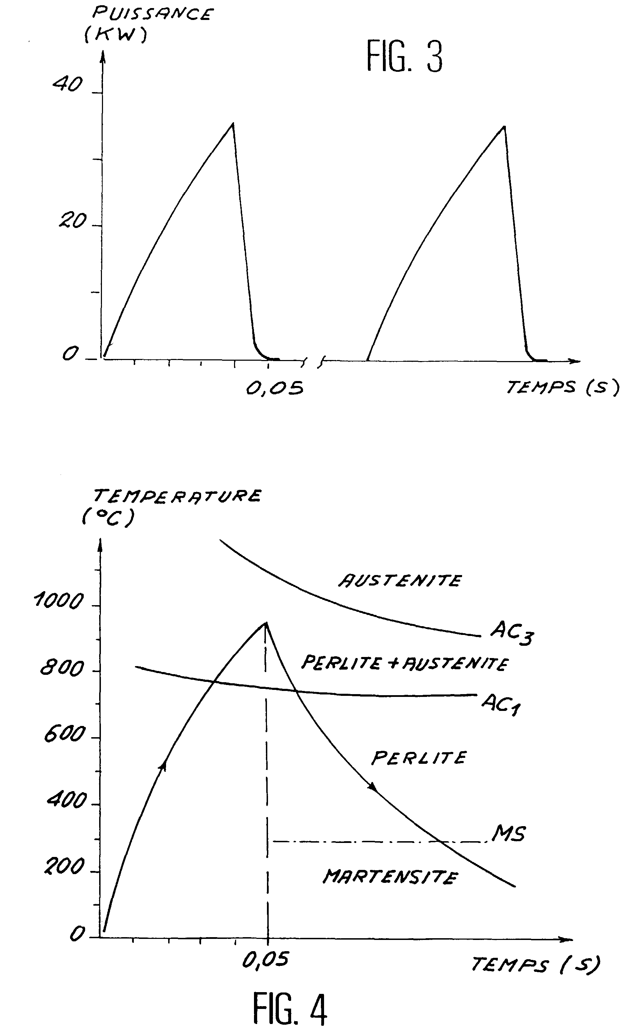

L'alimentation en courant est assurée par un générateur d'induction à tube triode haute-fréquence ou à transistor connu sous les acronymes anglo-saxons MOSFET (pour transistor à effet de champ du type à semiconducteur Métal-Oxyde) ou IGBT (pour transistor bipolaire à grille isolée) apte à délivrer, comme le montre la figure 3, des impulsions de courte durée d'interaction, de l'ordre de 0,05 s par exemple d'un courant électrique dont la puissance peut atteindre 40 W sous une haute-fréquence de 150 à 400 kHz.

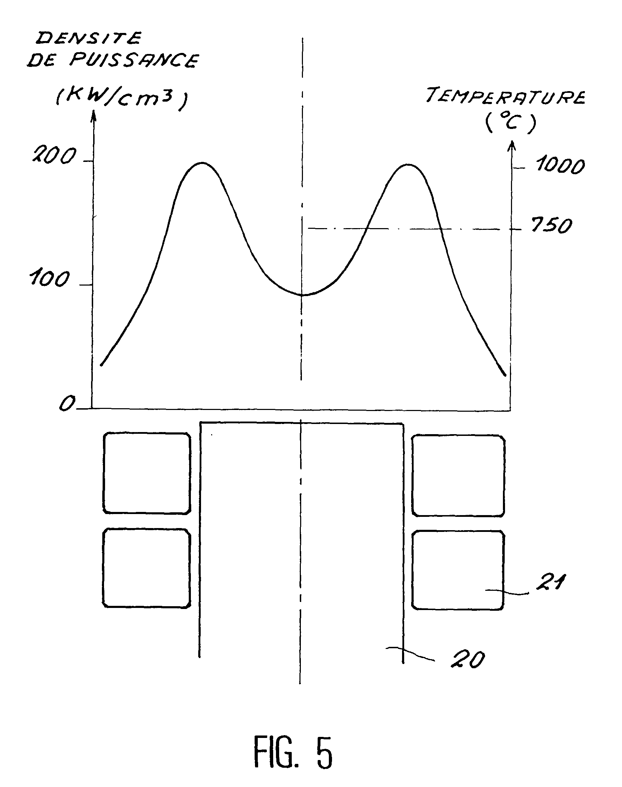

Avec des dispositifs munis de noyaux magnétiques inducteurs de 10 mm de diamètre, la densité surfacique de puissance est de l'ordre de 40 kW/cm² correspondant à une densité volumique de puissance de 200 kW/cm³ atteinte à l'issue de chaque impulsion de 0,05 s, comme indiqué sur la figure 5.

Dans ces conditions, la circulation des courants induits dans la pièce à durcir est indépendante de la diffusivité thermique du matériau et reste limitée à l'épaisseur de peau proportionnelle à la racine carrée de la résistivité du matériau et inversement proportionnelle à la racine carrée de la perméabilité magnétique du matériau et de la fréquence du courant électrique. On obtient ainsi, pour les aciers et les fontes, des profondeurs de durcissement inférieur à 0,2 mm pour des fréquences de 150 kHz et plus.

Ainsi qu'on peut le voir sur les figures 4 et 5, et conformément au procédé de l'invention, le dispositif de durcissement qui vient d'être décrit permet d'atteindre dans un temps très court une température de l'ordre de 1000°C, comprise entre les températures AC1 et AC3 de début et de fin d'austénisation, à laquelle le matériau de la pièce à durcir est partiellement austénitisé en une phase mixte perlite-austénite.

Après un refroidissement très rapide de plus de 5000°C/s par auto-trempe du matériau jusqu'à une température inférieure à la température Ms de début de transformation austénite/martensite, on obtient une phase mixte perlite-martensite présentant une dureté plus importante du matériau sans induire de trop grandes déformations thermiques.

A titre d'exemple, à partir d'une structure polito-ferritique classique de dureté 250 HV, le procédé et le dispositif de l'invention permettent d'obtenir une structure trempée de 700 HV bi-phasée perlito-martensitique constituée, comme a pu l'observer la Demanderesse, de lamelles de cémentite non dissoutes avec interface de martensite non résolue, formées à partir de la ferrite d'origine dont 10 à 20% sont conservés sous forme d'ilots.

Le durcissement de la surface est effectué localement par le noyau magnétique 20, 20' sous forme de taches dures dont la géométrie est fonction de la répartition et du niveau de densité de puissance électromagnétique induite à la surface. Cette densité étant maximale à l'interface enroulement 21, 21' - noyau magnétique 20, 20', on produit des taches dures dont le diamètre moyen est proche du diamètre extérieur dudit noyau, ainsi que le montre la figure 5. Lesdites taches dures sont répartites sur la surface selon un motif dont la densité est fonction de la trajectoire et de la vitesse de déplacement de noyau par rapport à la surface de la pièce.

Suivant la géométrie des noyaux magnétiques inducteurs et la juxtaposition des taches dures produites en regard de la surface à traiter, on génère des motifs macroscopique de durcissement de forme appropriée aux fonctions de la pièce vis-à-vis du glissement axial ou tangentiel.

On notera sur la figure 2 la présence de galets 30 en carbone dont le but est de fixer un jeu constant de 0,4 à 0,8 mm afin d'assurer, d'une part, la précision de présentation du noyau magnétique par rapport à la surface, nécessaire en haute-fréquence, et, d'autre part, le glissement entre le noyau et la surface de la pièce. Cette précision requise peut également être obtenue par la précision de la commande numérique de la trajectoire du noyau.

Le procédé et le dispositif de durcissement de surface, conformes à l'invention, présentent un certain nombre d'avantages concernant aussi bien le produit traité lui-même que la mise en oeuvre industrielle:
- s'agissant de la fonctionnalité du produit, la microstructure métallurgique obtenue montre un bon comportement tribologique par optimalisation de la portance vis-à-vis de la surface antagoniste au niveau des lamelles de cémentite très dure, de 2000 HV, et une résistance à l'usure au frottement par ancrage des lamelles dans une interface de martensite plus résistant de dureté supérieure à 500 HV que la ferrite de dureté 100 HV. Ces caractéristiques sont appropriées pour renforcer les cylindres de moteurs chargés thermiquement et réduire la trainée au frottement de paliers tournants;
- au niveau de la prestation du produit, le durcissement superficiel selon des anneaux permet de générer une morphologie superficielle constituée par des bourrelets annulaires durs en saillie par rapport à la surface d'origine non traitée. Il en résulte la formation de cavités internes fermées constituant des réserves de lubrifiant et la lubrification par communication par l'extérieur des bourrelets. Ce durcissement par des motifs tels que des taches annulaires ou autre permet un fonctionnement en régime de lubrification mixte favorable à la réduction de la consommation d'huile;
- en ce qui concerne la maîtrise de la mise en oeuvre industrielle, le durcissement de la fonte s'accompagne d'une diminution de sa ténacité et, de ce fait, une réduction des efforts de pierrage. Il en résulte une diminution des efforts de bridage et, consécutivement, des risques de déformation des pièces telles que l'ovalisation des cylindres. En conséquence, le procédé de l'invention peut être intégré entre pierrage d'ébauche et pierrage de finition;
- quant à l'évolution du produit, la double alternance perlito-martensite aux niveaux microstructural et macroscopique permet la régénération des arêtes de coupe des pierres et augmente ainsi leur durée de vie. De ce fait, le procédé peut être mis en oeuvre pour appliquer le pierrage fin, supérieur à 300 mesh, sans bourrage des pierres et sans formation de "couche beurrée" sur la surface pierrée afin d'obtenir un état de surface plus lisse, nécessaire pour réduire la consommation d'huile dans les cylindres.

## Revendications

1. Procédé de durcissement de surface d'une pièce mécanique en un matériau donné, caractérisé en ce que ledit procédé consiste à appliquer localement en motifs, à la surface de ladite pièce des impulsions de courte durée d'une induction magnétique de valeur crête élevée, la durée desdites impulsions et ladite valeur crête étant aptes à provoquer un chauffage superficiel de la pièce, sensiblement limitée à l'épaisseur de peau dudit matériau, jusqu'à une température d'austénitisation partielle du matériau.

2. Dispositif de durcissement de surface (10, 10') d'une pièce mécanique en un matériau donné, caractérisé en ce que ledit dispositif comporte:
- un noyau magnétique inducteur (20, 20') destiné à être appliqué localement en motifs à la surface (10, 10') de ladite pièce;
- un circuit électrique (21, 21') formant enroulement au moins partiel autour dudit noyau (20, 20');
- une alimentation de courant apte à délivrer audit circuit électrique (21, 21') des impulsions de courte durée d'un courant électrique de puissance crête élevée, la durée desdites impulsions et ladite puissance crête étant aptes à provoquer, par induction magnétique, un chauffage superficiel de la pièce, sensiblement limitée à l'épaisseur de peau dudit matériau, jusqu'à une température d'austénisation partielle du matériau.

3. Dispositif selon la revendication 2, caractérisé en ce que ledit noyau magnétique inducteur (20, 20') constitue un circuit magnétique ouvert de section cylindrique ou autre.

4. Dispositif selon la revendication 2, caractérisé en ce que ledit noyau magnétique inducteur (20, 20') constitue un circuit magnétique fermé en forme de U.

5. Dispositif selon l'une quelconque des revendications 2 à 4, caractérisé en ce que ladite alimentation de courant comporte un générateur à tube triode haute-fréquence.

6. Dispositif selon l'une quelconque des revendications 2 à 4, caractérisé en ce que ladite alimentation de courant comporte un générateur à transistor MOSFET ou IGBT.

7. Dispositif selon l'une quelconque des revendications 2 à 6, caractérisé en ce que ledit noyau magnétique inducteur (20') est muni de galets (30) de contact avec la surface (10') de ladite pièce.
